# EUROPÄISCHE PATENTSCHRIFT

(11) **EP 0 692 544 B1**
(45) Veröffentlichungstag und Bekanntmachung des Hinweises auf die Patenterteilung: **14.02.2001**
(21) Anmeldenummer: 95110454.6
(22) Anmeldetag: 05.07.1995
(51) Int. Cl.: C21C 5/52

(54) **Verfahren zur Steuerung der Schaumschlackebildung im Drehstromlichtbogenofen**
Method for controlling the foaming of slag in three-phase electric arc furnaces
Procédé pour conduire le moussage de la scorie dans des fours à arc à courant triphasé

(30) Priorität: 15.07.1994 DE 4425089
(43) Veröffentlichungstag der Anmeldung: 17.01.1996
(73) Patentinhaber: LEMKE, Joachim, Dr., 47506 Neukirchen-Vluyn (DE)
(72) Erfinder: Stercken, Karl, Dr., D-21224 Rosengarten (DE); Lemke, Joachim, Dipl.-Ing., 47506 Neukirchen-Vluyn (DE)
(74) Vertreter: Meissner, Peter E., Dipl.-Ing.

(56) Entgegenhaltungen:
- EP-A- 0 130 960
- EP-A- 0 637 634
- DD-A- 228 831
- US-A- 4 149 877
- STAHL UND EISEN, Bd. 102, Nr. 20, 4.Oktober 1982 DÜSSELDORF DE, Seiten 979-984, K. ALTFELD ET AL. 'Energiebilanzen .....'
- STAHL UND EISEN, Bd. 106, Nr. 11, 2.Juni 1986 DÜSSELDORF DE, Seiten 625-630, D. AMELING ET AL. 'Untersuchungen zur Schaumschlackenbildung .....'
- ELEKTROWÄRME INTERNATIONAL, Bd. 45, Nr. 1, Februar 1987 ESSEN DE, Seiten B29-B36, K. TIMM ET AL. 'Rechnergestützte .....'
- ELEKTROWÄRME INTERNATIONAL, Bd. 42, Nr. 5, Oktober 1984 ESSEN DE, Seiten B220-B227, H.-J. BECKMANN ET AL. 'Die akustische Emission .....'
- DATABASE WPI Section Ch, Week 8851 8.Februar 1989 Derwent Publications Ltd., London, GB; Class M24, AN 88-366671 & SU-A-1 397 499 ( CHERMETAVTOMATIKA) , 23.Mai 1988

## Beschreibung

Die Erfindung betrifft ein Verfahren zur Steuerung der Schaumschlackebildung im Drehstromlichtbogenofen, bei dem die Zufuhr von Kohlenstoff derart vorgegeben wird, daß sowohl eine mindestens teilweise Einhüllung der Lichtbögen realisiert ist als auch eine überdosierte Zufuhr von Kohlenstoff vermieden wird, wobei die dabei auftretende akustische Emission für die Beurteilung des Schlackenaufbaus herangezogen wird, wobei zur Steuerung der Durchsatzrate an Kohlenstoff eine automatische Erfassung der Schallemission des Lichtbogens durchgeführt wird, frequenzselektiv eine Auswertung der Amplitude, mindestens eines Teiles eines Frequenzspektrums des Schalles durchgeführt wird und bei einem Überschreiten eines durch eine Steuereinheit vorgebbaren Schallpegels die Durchsatzrate erhöht und bei einem Unterschreiten die Durchsatzrate vermindert wird.

Mit Drehstromlichtbogenöfen wird ein leistungsfähiges Einschmelzen von Metallen ermöglicht. Insbesondere erfolgt ein Einsatz bei einem Einschmelzen eisenhaltiger Ausgangsstoffe bei der Stahlherstellung. Das Einschmelzen des Stahlvormaterials, das beispielsweise als Schrott, festes Roheisen oder Eisenschwamm ausgebildet ist, erfolgt überwiegend mit der Energie des Lichtbogenofens. Ein weiterer Energieanteil wird durch die Verbrennung von oxidierbaren Bestandteilen, insbesondere von Kohlenstoff, beim Einblasen von Sauerstoff bereitgestellt.

Der konstruktive Aufbau des Lichtbogenofens erfolgt derart, daß Graphitelektroden korrespondierend zu einem metallischen Ofeneinsatz angeordnet sind und zwischen den Graphitelektroden und dem Ofeneinsatz der Lichtbogen gezündet wird. Bei einem Drehstromlichtbogenofen kommen drei Elektroden zum Einsatz. Die Energie des Lichtbogens wird überwiegend in Form von Strahlung und Konvektion an die Umgebung emittiert. Eine übliche elektrische Auslegung erfolgt derart, daß Sekundärspannungen von bis zu 1.000 V verwendet werden, die in Deutschland zur Zeit erlaubt sind.

Ein derartiger Elektrolichtbogenofen wird beispielsweise in der Veröffentlichung "Stahl und Eisen 102 (1982), Nr. 20, Seite 979 ff, Energiebilanzen von Elektrolichtbogenöfen Auswirkungen wassergekühlter Ofenelemente, Klaus Altfeld und Axel Schneider" beschrieben.

Die Konstruktion eines Lichtbogenofens erfolgt derart, daß eine relativ flache Schale zur Aufnahme der Schmelze verwendet wird, die mit einem feuerfesten Material ausgekleidet ist. Im Wand- und Deckelbereich können wassergekühlte Ofenelemente eingesetzt werden. Durch die Verwendung einer Wasserkühlung wird zwar der Abwärmeverlust je Zeiteinheit erhöht, es wird jedoch andererseits eine intensivere elektrische Energieeinbringung ermöglicht, so daß insgesamt ein geringerer spezifischer Energiebedarf je Gewichtseinheit an Schmelzmaterial resultiert. Darüber hinaus können kürzere Schmelzzeiten und damit höhere Durchsätze je Zeiteinheit realisiert werden. Dies hat eine bessere Armortisation der Anlage zur Folge.

Ein wichtiger Aspekt bei einem Betrieb des Elektrolichtbogenofens besteht darin, einen möglichst hohen Anteil der vom Lichtbogen abgestrahlten Energie in das Schmelzgut einzuleiten und die Abstrahlverluste möglichst gering zu halten. Hierzu ist es bekannt, im Bereich des Schmelzgutes eine Schaumschlackebildung hervorzurufen, bei der durch die Schaumschlacke eine Abdeckung der Lichtbögen erfolgt. Dies wird beispielsweise in der Veröffentlichung "Stahl und Eisen 106 (1986), Nr. 11, Seite 625 ff, Untersuchungen zur Schaumschlackebildung im Elektrolichtbogenofen, Dieter Ameling und andere" beschrieben.

Bei der Schaumschlackebildung wird ausgenutzt, daß im Elektrolichtbogenofen oberhalb des Stahlbades eine Schlacke entsteht, die im wesentlichen die Komponenten Eisenoxid, Calciumoxid, Siliziumdioxid, Aluminiumoxid und Magnesiumoxid enthält. Durch ein Aufschäumen dieser Schlacke wird der Lichtbogen derart eingehüllt, daß eine direkte Wärmestrahlung an die Ofenwände und den Ofendeckel weitgehend vermieden wird. Bei einem Betrieb des Elektrolichtbogenofens ist somit dafür Sorge zu tragen, daß ein geeigneter Anteil an Kohlenstoff und Sauerstoff vorhanden ist, um durch Kohlenmonoxidbildung die Schlacke aufzuschäumen. Eine zu hohe Schlackenmengenbildung ist zu vermeiden, da bei einer Abfuhr aus dem Ofen Energieverluste auftreten, die die Energiebilanz verschlechtern.

Zur Schaumschlackebildung wird Sauerstoff mit Rohren unter die Stahlbadoberfläche eingeblasen. Es wird dabei Kohlenstoff verbrannt, der bereits bei einer Einbringung in den Lichtbogenofen im Material, beispielsweise im Roheisen oder im Eisenschwamm enthalten ist. Darüber hinaus erfolgt eine Kohlenstoffzufuhr über zusätzliche Einblasleitungen, durch die feinkörnige Kohle transportiert wird. Ebenfalls ist es möglich, den Kohlenstoff in den Bereich der Schlacke einzublasen.

Ein Verfahren, das die Zusammenhänge zwischen den elektrischen und akustischen Lichtbogeneigenschaften aufzeigt, ist aus der DE-Z. "elektrowärme international", 45 (1987), S. B29 bis B36, bekannt. Hierbei wird auch die akustische Emission der Lichtbögen mittelbar für eine Zustandsbeobachtung, vor allem für den Schlackenaufbau, herangezogen.

Weiterhin sind aus der DE-Z. "elektrowärme international", 42 (1984), S. B220 bis B227, Schalldruckmessungen während des Schmelzbetriebes bekannt. Dabei wird als charakterisch eine Grundfrequenz von 100 Hz mit einer Reihe von harmonischen Vielfachen beschrieben.

SU-A-1 397 499 beschreibt ein Steuerungsverfahren entsprechend dem Oberbegriff von Anspruch 1, wobei als Signalfrequenzen diejenigen eines unteren Bandes von 50, 100, 150 und 200 Hz und diejenigen eines oberen Bandes von 650, 700, 750 und 800 Hz verwendet werden. Es wird ein Mittelwert aus den Amplituden der vier Frequenzen des oberen Bandes und ein Mittelwert aus den Amplituden der vier Frequenzen des unteren Bandes gebildet und es werden die Mittelwerte zueinander ins Verhältnis gesetzt.

Aufgabe der vorliegenden Erfindung ist es, ein Verfahren der einleitend genannten Art derart zu verbessern, daß die Bildung einer optimalen Menge an Schaumschlacke gewährleistet ist.

Diese Aufgabe wird erfindungsgemäß dadurch gelöst, daß bei einer 50 Hz Netz-Versorgungsfrequenz nur die beim zyklischen Zunden des Lichtbogens auftretende Signalfrequenz von 100 Hz verwendet wird und daß als obere Ansprechschwelle ein Schallpegel im Bereich von 85 db und als untere Ansprechschwelle ein Schallpegel von etwa 70 db verwendet werden.

Durch die meßtechnische Erfassung der Schallemission wird ausgenutzt, daß die Einhüllung des Lichtbogens durch die Schaumschlacke zusätzlich zur Abschirmung der Wärmestrahlung auch eine Abschirmung einer Schallemission bewirkt, die durch das zyklische Zünden der Lichtbögen hervorgerufen wird. Die Auswertung des Frequenzspektrums im Bereich von 100 Hz zeichnet sich dadurch aus, daß dieses Spektrum besonders signifikant der Schallemission der Lichtbögen zugeordnet ist und Störgeräusche relativ gleichverteilt über das Frequenzspektrum vorliegen. Die selektive Auswertung des Frequenzspektrums ermöglicht somit bei geringem meßtechnischen Aufwand ein sehr gutes Verhältnis von Nutzsignal zu Störsignal. Die Berücksichtigung von Schwellwerten für die Schallpegel läßt es zu, ein definiertes Steuerverhalten bereitzustellen, das einerseits eine gute Steuerqualität gewährleistet, andererseits aber auch zu häufige Änderungen der Werte für die Durchsatzrate, die einen Verschleiß im Bereich der Stellorgane zur Folge hätten, vermeidet.

Zur Erfassung eines allgemeinen Lichtbogenschalls wird vorgeschlagen, daß zusätzlich zur Auswertung des Schallpegels im Bereich von 100 Hz nur der Schallpegel im Bereich von 300 Hz ausgewertet wird.

Eine an die Schallemission angepaßte Steuerung der Schaumschlackebildung erfolgt dadurch, daß zwischen einer unteren Ansprechschwelle und einer oberen Ansprechschwelle zur Steuerung der Durchsatzrate an Kohlenstoff ein Quotient aus den Schallpegeln im Bereich von 100 Hz und im Bereich von 300 Hz ausgewertet wird.

Zur Gewährleistung eines schnellen Ansprechens bei einem Verlassen des Regelbereiches wird vorgeschlagen, daß bei einem Überschreiten der oberen Ansprechschwelle eine maximale Förderung an Kohlenstoff durchgeführt wird.

Ein schnelles Ansprechen bei einer zu starken Schaumschlackebildung wird dadurch ermöglicht, daß bei einem Unterschreiten der unteren Ansprechschwelle die Zufuhr an Kohlenstoff vollständig eingestellt wird.

Eine gerätetechnisch einfach zu realisierende Steuervorschrift besteht darin, daß zwischen den Ansprechschwellen eine Erhöhung der Kohlenstoffzufuhr im wesentlichen proportional zur Zunahme des Schallpegels erfolgt.

Bei der Signalauswertung hat es sich als vorteilhaft erwiesen, daß im Frequenzbereich von 300 Hz ein Frequenzband von etwa einer 1/6 Oktave ausgewertet wird.

Eine weitere vorteilhafte Signalselektion besteht darin, daß im Frequenzbereich von 100 Hz ein Frequenzband von etwa einer 1/6 Oktave ausgewertet wird.

In den Zeichnungen sind Ausführungsbeispiele der Erfindung schematisch dargestellt. Es zeigen:
- Fig. 1: ein vereinfachtes Blockschaltbild zur gerätetechnischen Realisierung,
- Fig. 2: ein schematisches Blockschaltbild zur Durchführung der Meßwertverarbeitung,
- Fig. 3: einen resultierenden theoretischen Schallpegelverlauf bei einer Erfassung der Schallemissionen von 3 Lichtbögen,
- Fig. 4: eine theoretische Darstellung der drei einzelnen Lichtbögen zugeordneten Schallpegelverläufe,
- Fig. 5: ein Frequenzspektrum zum Schallpegelverlauf gemäß Fig. 3,
- Fig. 6: einen resultierenden theoretischen Schallpegelverlauf bei einer Auswertung von drei Lichtbögen, bei denen einer vollständig mit Schaumschlacke, einer halb mit Schaumschlacke und der weitere nicht mit Schaumschlacke bedeckt ist,
- Fig. 7: einen Schallpegelverlauf der einzelnen Lichtbögen bei einer Schaumschlackenbedeckung gemäß Fig. 6
**und**
- Fig. 8: das Frequenzspektrum bei einem Schallpegelverlauf gemäß Fig. 6.

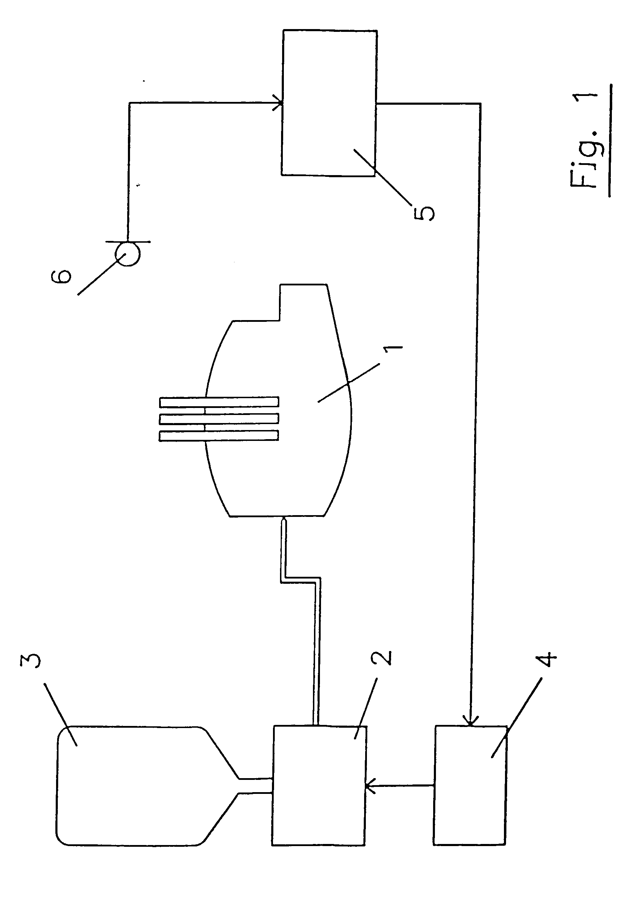

Entsprechend der Ausführungsform in Fig. 1 ist ein mit Drehstrom betriebener Lichtbogenofen (1) über ein Förderelement (2) mit einem Vorratsbehälter (3) für Kohlenstoff verbunden. Das Förderelement (2) wird von einem Stellglied (4) gesteuert, das an eine Steuereinheit (5), beispielsweise ein Rechner, angeschlossen ist. Die Steuereinheit (5) wertet das Signal eines Mikrofons (6) aus, das im Bereich des Elektrolichtbogenofens (1) angeordnet ist und den von innerhalb des Lichtbogenofens (1) gezündeten Lichtbögen emittierten Schall erfaßt.

Innerhalb des Lichtbogenofens (1) sind drei Elektroden angeordnet, die über die ihnen zugeordneten Lichtbögen Energie emittieren, die zum Aufschmelzen des eisenhaltigen Materials verwendet wird.

Die Lichtbögen des Lichtbogenofens (1) zünden nach jedem Phasendurchgang der Speisespannungen erneut. Bei einer Versorgung mit einer Netzfrequenz von 50 Hz wird somit jeder Lichtbogen 100 x je Sekunde gezündet. Bei Berücksichtigung der drei vorhandenen Lichtbögen, die phasenverschoben bei einer Speisung aus einem Drehstromnetz versorgt werden, erfolgen somit 300 Zündvorgänge je Sekunde.

Es zeigt sich, daß im Frequenzbereich um 100 Hz ein für die Schallemission der Lichtbögen besonders typischer Schallpegel vorliegt. Eine weitere typische Frequenz zur Kennzeichnung der Schallemissionen liegt im Bereich von 300 Hz. Für die Signalauswertung ist es zweckmäßig, ein Frequenzband von jeweils einer 1/6 Oktave um die Frequenzen von 100 Hz und 300 Hz herum auszuwerten. Ein unterer Schwellwert für den Schallpegel liegt im Bereich von 70 dB. Ein oberer Pegelwert betragt etwa 85 dB.

Entsprechend einem Ausführungsbeispiel kann eine Signalaufbereitung derart erfolgen, daß unterhalb von 70 dB der Schallpegel des Frequenzbereiches um 100 Hz herum ausgewertet wird und daß dieser Frequenzbereich ebenfalls bei einem Ansteigen des Schallpegels auf einen Wert oberhalb von 85 dB herangezogen wird. In einem Schallbereich zwischen 70 dB und 85 dB ist es möglich, aus einem Verhältnis der Schallpegel des Frequenzbereiches um 100 Hz und 300 Hz ein Steuersignal für das Stellglied (4) zu generieren.

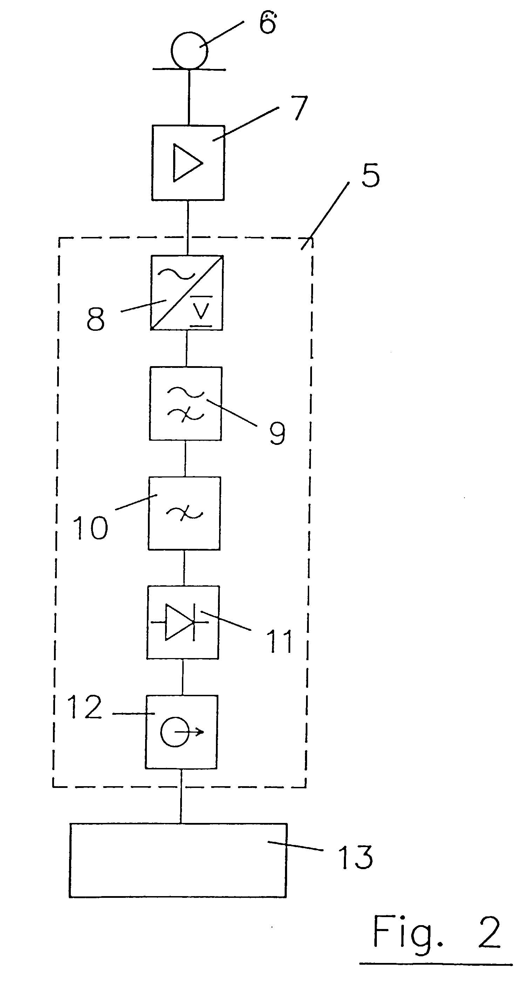

Fig. 2 zeigt ein Blockschaltdiagramm zur Veranschaulichung der funktionellen Zuordnung der Komponenten. Das Mikrofon (6) beinhaltet einen Wind- und Staubschutz. Das Ausgangssignal des Mikrofones (6) wird einem Vorverstärker (7) zugeführt.

Im Bereich der Steuereinheit (5) sind eine Mikrofonspeisung (8) und ein Hochpaß (9) angeordnet. Die Mikrofonspeisung (8) führt die elektrische Versorgung des Mikrofones (6) durch. Der Hochpaß (9) ist derart dimensioniert, daß Geräuschanteile unterhalb von 30 Hz entfernt werden. Dem Hochpaß (9) nachgeschaltet ist ein Frequenzfilter (10), der Signale in einem Frequenzbereich einer 1/6 Oktave um 100 Hz passieren läßt. Zur Linearisierung des Amplitudenbereiches ist dem Frequenzfilter (10) ein Detektor (11) nachgeschaltet. Über eine Ausgangsschnittstelle (12), die als ein Stromwandler für einen Bereich von 0 - 20 mA ausgebildet sein kann, erfolgt ein Anschluß an eine Meßwerterfassung (13).

Gemäß der Erfindung wird das Signal im Frequenzbereich um 100 Hz ausgewertet, um die allgemeine Lautstärke des Lichtbogenschalls zu erfassen. Überschreitet dieser allgemeine Schallpegel die vorgegebene obere Schwelle bei der Signalauswertung, so wird das Stellglied (4) derart angesteuert, daß das Förderelement (2) mit maximaler Fördergeschwindigkeit arbeitet. Dies kann beispielsweise durch vollständiges Öffnen einer Materialklappe erfolgen. Unterschreitet der Schallpegel im Frequenzbereich von 100 Hz den vorgegebenen unteren Schwellwert, so wird die Förderung von Kohle über das Förderelement (2) vollständig eingestellt. Dies kann durch ein Schließen der Materialklappe realisiert sein.

Zur Signalerfassung ist insbesondere ein Mikrofon (6) geeignet, das als Freifeldmikrofon ausgebildet ist. Es wurde ermittelt, daß eine optimale Einstellung der Förderung an fein gemahlener Kohle dann vorliegt, wenn eine lediglich teilweise Einhüllung der Lichtbögen durch Schaumschlacke erfolgt. Eine zu große Zufuhr von Kohle hat somit nicht nur den Nachteil eines zur großen Energieaustrages durch die Wärmekapazität des aus dem Lichtbogenofens (1) ausgetragenen Materials, sondern es wird darüber hinaus eine optimale Wärmeeinstrahlung in das Schmelzgut gerade bei einem teilweise mit Schaumschlacke bedeckten Lichtbogen erreicht.

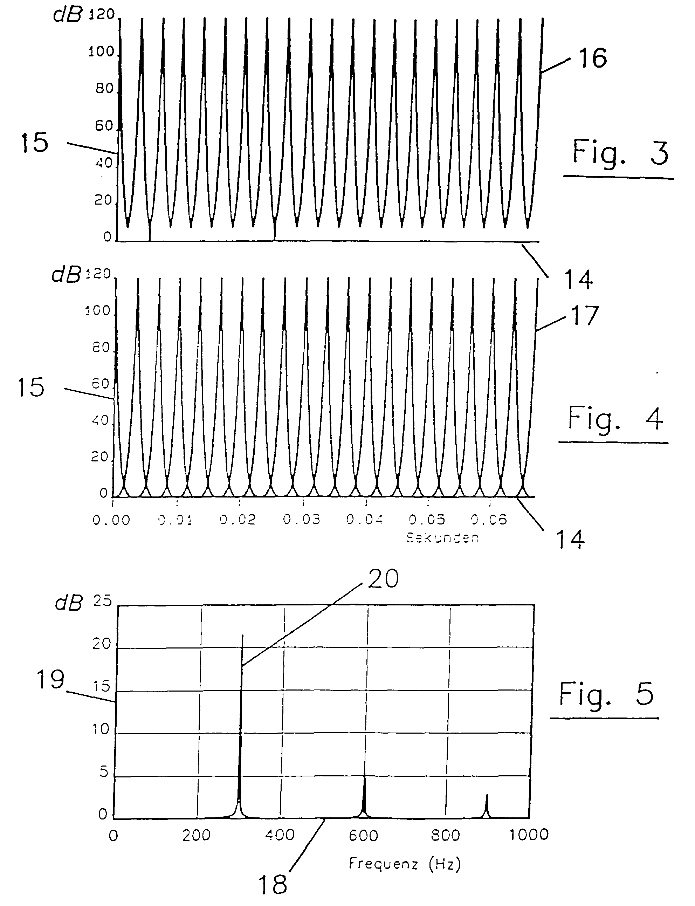

Zur Veranschaulichung der theoretischen Schallpegelverläufe ist in Fig. 3 in einem Diagramm, das relativ zu einer Zeitachse (14) und zu einer Amplitudenachse (15) eingetragen ist, ein Gesamtverlauf (16) bei einer Überlagerung der Schallemissionen von drei Lichtbögen abgebildet. Die Amplitudenachse (15) ist in dB skaliert. Fig. 4 zeigt zugehörige Einzelverläufe (17) der drei Lichtbögen. In Fig. 5 ist korrespondierend zu Fig. 3 relativ zu einer in Hz skalierten Frequenzachse (18) und einer in dB skalierten Amplitudenachse (19) eine Frequenzanalyse (20) des Schallsignals dargestellt.

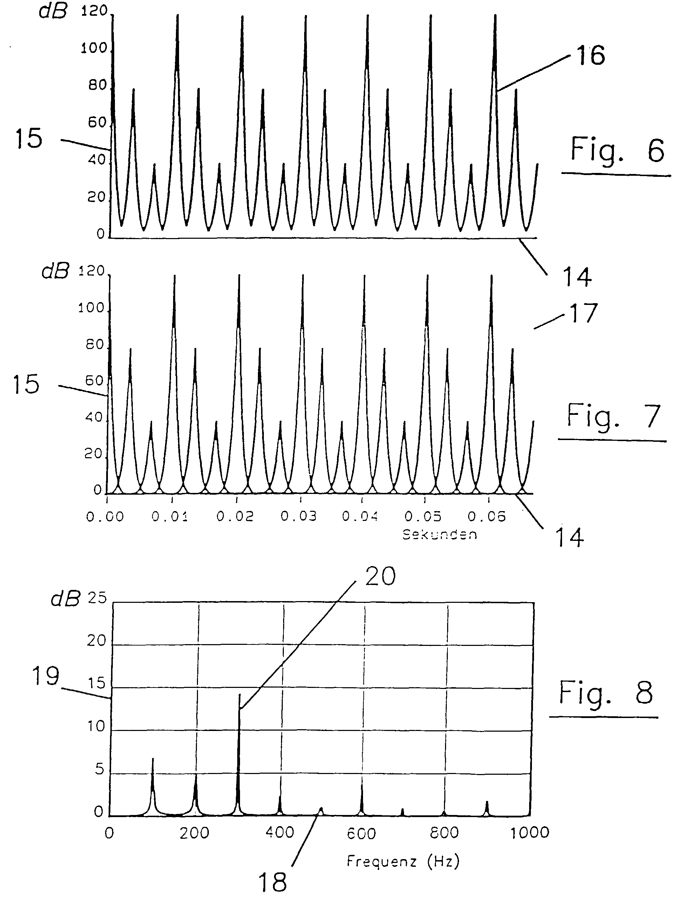

Korrespondierend zu den Darstellungen in Fig. 3 bis Fig. 5 ist in Fig. 6 bis Fig. 8 der Signalverlauf dargestellt, der sich ergibt, wenn einer der Lichtbögen vollständig von Schaumschlacke bedeckt ist, der zweite Lichtbogen etwa halb mit Schaumschlacke bedeckt und der dritte Lichtbogen unbedeckt von Schaumschlacke ist.

## Patentansprüche

1. Verfahren zur Steuerung der Schaumschlackebildung im Drehstromlichtbogenofen, bei dem die Zufuhr von Kohlenstoff derart vorgegeben wird, daß sowohl eine mindestens teilweise Einhüllung der Lichtbögen realisiert ist als auch eine überdosierte Zufuhr von Kohlenstoff vermieden wird, wobei die dabei auftretende akustische Emission für die Beurteilung des Schlackenaufbausherangezogen wird, wobei
zur Steuerung der Durchsatzrate an Kohlenstoff eine automatische Erfassung der Schallemission des Lichtbogenofens durchgeführt wird, frequenzselektiv eine Auswertung der Amplitude, mindestens eines Teiles eines Frequenzspektrums des Schalles, durchgeführt wird und
bei einem Überschreiten eines durch eine Steuereinheit vorgebbaren Schallpegels die Durchsatzrate erhöht und bei einem Unterschreiten die Durchsatzrate vermindert wird,
dadurch gekennzeichnet,
dass bei einer 50 Hz Netz-Nersorgungsfrequenz nur die beim zyklischen Zünden des Lichtbogens auftretende Signalfrequenz von 100 Hz verwendet wird und
dass als obere Ansprechschwelle ein Schallpegel im Bereich von 85 db und als untere Ansprechschwelle eine Schallpegel von etwa 70 db verwendet werden.

2. Verfahren nach Anspruch 1, dadurch gekennzeichnet , daß zusätzlich zur Auswertung des Schallpegels im Bereich von 100 Hz nur der Schallpegel im Bereich von 300 Hz ausgewertet wird.

3. Verfahren nach Anspruch 1 oder 2, dadurch gekennzeichnet, daß zwischen einer unteren Ansprechschwelle und einer oberen Ansprechschwelle zur Steuerung der Durchsatzrate an Kohlenstoff ein Quotient aus den Schallpegeln im Bereich von 100 Hz und im Bereich von 300 Hz ausgewertet wird.

4. Verfahren nach einem der Ansprüche 1 bis 3, dadurch gekennzeichnet, daß bei einem Überschreiten der oberen Ansprechschwelle eine maximale Förderung an Kohlenstoff durchgeführt wird.

5. Verfahren nach einem der Ansprüche 1 bis 4, dadurch gekennzeichnet, daß bei einem Unterschreiten der unteren Ansprechschwelle die Zufuhr an Kohlenstoff vollständig eingestellt wird.

6. Verfahren nach einem der Ansprüche 1 bis 5, dadurch gekennzeichnet, daß zwischen den Ansprechschwellen eine Erhöhung der Kohlenstoffzufuhr im wesentlichen proportional zur Zunahme des Schallpegels erfolgt.

7. Verfahren nach einem der Ansprüche 2 bis 6, dadurch gekennzeichnet, daß im Frequenzbereich von 300 Hz ein Frequenzband von etwa einer 1/6 Oktave ausgewertet wird.

8. Verfahren nach einem der Ansprüche 1 bis 7, dadurch gekennzeichnet, daß im Frequenzbereich von 100 Hz ein Frequenzband von etwa einer 1/6 Oktave ausgewertet wird.

## Claims

1. A method of controlling foamed slag formation in three-phase arc furnaces, in which the carbon feed is preset in such a way that at least partial encapsulation of the arcs is obtained and excess carbon feed is prevented, the acoustic emission arising being used to assess slag build-up, automatic detection of the noise emission of the arc being performed in order to control the rate of carbon throughput, an evaluation of the amplitude, at least of part of a frequency spectrum of the noise, being performed in frequency-selective manner and the rate of throughput being increased if a noise level which may be preset by a control unit is exceeded and the rate of throughput being reduced if the noise level drops below the set level,
characterised in that
at a 50 Hz mains frequency, only the signal frequency of 100 Hz arising upon cyclic ignition of the arc is used and in that a noise level in the region of 85 db is used as the upper response threshold and a noise level of approximately 70 db is used as the lower response threshold.

2. A method according to claim 1, characterised in that in addition to using the noise level in the region of 100 Hz, only the noise level in the region of 300 Hz is used.

3. A method according to claim 1 or claim 2, characterised in that between a lower response threshold and an upper response threshold, a quotient of the noise levels in the region of 100 Hz and in the region of 300 Hz is used to control the rate of carbon throughput.

4. A method according to one of claims 1 to 3,
characterised in that maximum supply of carbon is effected if the upper response threshold is exceeded.

5. A method according to one of claims 1 to 4,
characterised in that carbon feed is stopped completely if the noise level drops below the lower response threshold.

6. A method according to one of claims 1 to 5,
characterised in that, between the response thresholds, an increase in carbon feed proceeds substantially in proportion to the increase in noise level.

7. A method according to one of claims 2 to 6,
characterised in that a frequency band of approximately 1/6 of an octave is used in the 300 Hz frequency region.

8. A method according to one of claims 1 to 7,
characterised in that a frequency band of approximately 1/6 of an octave is used in the 100 Hz frequency region.

## Revendications

1. Procédé pour commander la formation de laitier mousseux dans des fours à arc à courant triphasé, dans lequel l'amenée de carbone est prédéfinie de sorte qu'aussi bien un enveloppement au moins partiel des arcs électriques est réalisé qu'également une amenée surdosée de carbone est évitée, l'émission acoustique engendrée étant utilisée pour évaluer la formation de laitier, une détermination automatique de l'émission sonore du four à arc électrique étant effectuée pour commander le débit de carbone, une exploitation de l'amplitude d'au moins une partie du spectre de fréquences du son étant effectuée de façon sélective en fréquences et, lors d'un dépassement d'un niveau sonore pouvant être prédéfini par une unité de commande, le débit étant augmenté, et le débit étant diminué lorsque ce niveau n'est pas atteint,
caractérisé en ce que, pour une fréquence d'alimentation du réseau de 50 Hz, on utilise uniquement la fréquence de signal de 100 Hz apparaissant lors de l'allumage cyclique de l'arc électrique, et en ce que, comme seuil supérieur de réponse, il est utilisé un niveau sonore dans la zone de 85 db et, comme seuil de réponse inférieur, un niveau sonore d'environ 70 db.

2. Procédé selon la revendication 1,
caractérisé en ce que, de façon supplémentaire à l'exploitation du niveau sonore dans la plage de 100 Hz, uniquement le niveau sonore dans la zone de 300 Hz est exploité.

3. Procédé selon la revendication 1 ou 2,
caractérisé en ce qu'entre un niveau de réponse inférieur et un niveau de réponse supérieur pour la commande du débit de carbone, il est exploité un quotient à partir des niveaux sonores dans la zone de 100 Hz et dans la zone de 300 Hz.

4. Procédé selon une des revendications 1 à 3,
caractérisé en ce que, lors d'un dépassement du seuil de réponse supérieur, il est effectué une alimentation maximale en carbone.

5. Procédé selon une des revendications 1 à 4,
caractérisé en ce que, lorsque le seuil de réponse inférieur n'est pas atteint, l'amenée de carbone est intégralement réglée.

6. Procédé selon une des revendications 1 à 5,
caractérisé en ce que, entre les seuils de réponse, il est effectué une augmentation de l'amenée de carbone de façon généralement proportionnelle à l'augmentation du niveau sonore.

7. Procédé selon une des revendications 2 à 6,
caractérisé en ce que, dans la zone de fréquence de 300 Hz, une bande de fréquence d'environ 1/6 d'octave est exploitée.

8. Procédé selon une des revendications 1 à 7,
caractérisé en ce que, dans la zone de fréquence de 100 Hz, une bande de fréquence d'environ 1/6 d'octave est exploitée.
